# EUROPEAN PATENT SPECIFICATION

(11) **EP 2 799 470 B1**
(45) Date of publication and mention of the grant of the patent: **28.11.2018**
(21) Application number: 12861258.7
(22) Date of filing: 20.12.2012
(51) Int. Cl.: B32B 5/02, B32B 5/26, B32B 7/02, C08J 5/24

(54) **CARBON FIBER BASE, PREPREG, AND CARBON-FIBER-REINFORCED COMPOSITE MATERIAL**
KOHLENSTOFFFASERBASIS, PREPREG UND KOHLENSTOFFFASERVERSTÄRKTER VERBUNDSTOFF
BASE EN FIBRES DE CARBONES, PRÉIMPRÉGNÉ ET MATÉRIAU COMPOSITE RENFORCÉ PAR DES FIBRES DE CARBONE

(30) Priority: 26.12.2011 JP 2011283400
(43) Date of publication of application: 05.11.2014
(73) Proprietor: Toray Industries, Inc., Tokyo 103-8666 (JP)
(72) Inventor: NARIMATSU, Kaori, Iyo-gun Ehime 791-3193 (JP); HIRANO, Noriyuki, Iyo-gun Ehime 791-3193 (JP); HONMA, Masato, Otsu-shi Shiga 520-8558 (JP); TSUCHIYA, Atsuki, Iyo-gun Ehime 791-3193 (JP); KITANO, Akihiko, Iyo-gun Ehime 791-3193 (JP)
(74) Representative: Prüfer & Partner mbB Patentanwälte · Rechtsanwälte
(86) International application number: PCT/JP2012/082997
(87) International publication number: WO 2013/099741

(56) References cited:
- JP-A- S6 044 334
- JP-A- S6 481 826
- JP-A- H01 250 456
- JP-A- H05 318 472
- JP-A- H10 251 973
- JP-A- S61 176 633
- JP-A- 2007 268 735
- US-B1- 6 265 333
- LEE S H ET AL: "A toughening and strengthening technique of hybrid composites with non-woven tissue", JOURNAL OF MATERIALS PROCESSING TECHNOLOGY, ELSEVIER, NL, vol. 207, no. 1-3, 16 October 2008 (2008-10-16), pages 21-29, XP025433944, ISSN: 0924-0136, DOI: 10.1016/J.JMATPROTEC.2007.12.047 [retrieved on 2008-01-25]
- S LEE ET AL: "Tensile properties and fatigue characteristics of hybrid composites with non-woven carbon tissue", INTERNATIONAL JOURNAL OF FATIGUE, vol. 24, no. 2-4, 1 April 2002 (2002-04-01), pages 397-405, XP055202987, ISSN: 0142-1123, DOI: 10.1016/S0142-1123(01)00095-0
- WALKER L ET AL: "Comparison of carbon fibre/epoxy composites reinforced by short aramid and carbon fibres", SCRIPTA MATERIALIA, ELSEVIER, AMSTERDAM, NL, vol. 41, no. 6, 20 August 1999 (1999-08-20), pages 575-582, XP004325779, ISSN: 1359-6462, DOI: 10.1016/S1359-6462(99)00193-1
- KUWATA M ET AL: "Interlaminar toughness of interleaved CFRP using non-woven veils: Part 1. Mode-I testing", COMPOSITES PART A: APPLIED SCIENCE AND MANUFACTURING, ELSEVIER SCIENCE PUBLISHERS B.V., AMSTERDAM, NL, vol. 42, no. 10, 13 July 2011 (2011-07-13) , pages 1551-1559, XP028382423, ISSN: 1359-835X, DOI: 10.1016/J.COMPOSITESA.2011.07.016 [retrieved on 2011-07-23]

## Description

### TECHNICAL FIELD

The present invention relates to a carbon fiber base, a prepreg formed using the carbon fiber base, and a carbon-fiber-reinforced composite material using the carbon fiber base and the prepreg. More particularly, the present invention relates to a carbon fiber base and a prepreg which are suitable for formation of a carbon-fiber-reinforced composite material having all of excellent interlaminar fracture toughness, excellent static strength and excellent conductivity. The present invention also relates to a carbon-fiber-reinforced composite material having all of excellent interlaminar fracture toughness, excellent static strength and excellent conductivity.

### BACKGROUND ART

Carbon-fiber-reinforced composite material is excellent in strength, stiffness, conductivity and so on, and are widely used in general industrial applications such as aircraft structural components, sports goods, windmills, automobile outside plates, IC trays and cases of notebook personal computers. The demand therefor has increased year by year.

The carbon-fiber-reinforced composite material is a heterogeneous material having carbon fibers as reinforcing fibers and a matrix resin as essential components, and has a large difference between physical properties in an arrangement direction of carbon fibers and physical properties in other directions. For example, interlaminar fracture toughness of the carbon-fiber-reinforced composite material, and impact resistance shown by resistance to falling weight impact, which depends on interlaminar fracture toughness, are not drastically improved only by increasing the strength of reinforcing fibers.

Particularly, carbon-fiber-reinforced composite materials having a thermosetting resin as a matrix resin tend to be easily ruptured by stresses in directions other than an arrangement direction of reinforcing fibers owing to low toughness of the matrix resin. Therefore, various techniques have been proposed which are intended for improving physical properties of the carbon-fiber-reinforced composite material so that stresses in directions other than an arrangement direction of reinforcing fibers can be resisted.

Among them, there has been proposed a carbon-fiber-reinforced composite material of which compression strength after falling weight impact is increased by improving interlaminar fracture toughness by using a prepreg or preform with particles, fibers or a film of a thermoplastic resin disposed on the surface area (see Patent Documents 1, 2 and 3) .

However, when a thermoplastic resin is used as an interlaminar reinforcing material, a high level of interlaminar fracture toughness is provided, but static strength is reduced because the interlayer becomes a fragile layer. Further, interfacial adhesion between the thermosetting resin and the thermoplastic resin becomes insufficient, so that rupture due to interfacial peeling proceeds, leading to an insufficient interlaminar fracture toughness improving effect. Moreover, since a resin layer serving as an insulating layer exists between layers, conductivity in a thickness direction is significantly reduced among conductivities which constitute one of characteristics of the carbon-fiber-reinforced composite material.

As is apparent from this example, development of a carbon-fiber-reinforced composite material having all of excellent interlaminar fracture toughness, excellent static strength and excellent conductivity is confronted with difficulties.

Here, the interlaminar fracture toughness is a resistance to development of interlaminar peeking cracks of members laminated in a layered form, which form a carbon-fiber-reinforced composite material, and refers to opening mode interlaminar rupture toughness (GIc) and shear mode interlaminar rupture toughness (GIIc) in a crack development process. When interlaminar rupture toughness is high, impact strength obtained in a Charpy impact test and an Izod impact test, and compression strength after impact (CAI) are also increased.

The static strength refers to a stress required to rupture a carbon-fiber-reinforced composite material when a flexural or tensile force is applied thereto. Examples include 0 degree flexural strength and 0 degree tensile strength.

The conductivity is an indicator of ease with which current passes when an electric field is applied to a carbon-fiber-reinforced composite material. For example, conductivity can be evaluated by measuring a surface resistance, a volume resistance in a direction parallel to a lamination direction, or an electrical conductivity in a direction perpendicular to the lamination direction. Particularly, when an insulating interlaminar reinforcing material is inserted into a prepreg, an electrical conductivity in a direction perpendicular to the lamination direction, i.e. a thickness direction, is reduced, and therefore conductivity is important as an indicator for evaluation of a prepreg. The conductivity in a thickness direction refers to an electrical conductivity in a direction perpendicular to a lamination direction.

As a method for improving interlaminar conductivity, there have been proposed a method comprising blending metal particles in a matrix resin of a carbon-fiber-reinforced composite material (see Patent Document 4) and a method comprising blending carbon particles in the matrix resin (see Patent Document 5). In these documents, however, satisfying all of excellent interlaminar fracture toughness, excellent static strength and excellent conductivity is not mentioned at all. Further, a method comprising introducing a metal wire into a carbon fiber woven fabric to improve conductivity has been proposed (see Patent Document 6). However, this document neither discloses nor suggests a relationship between interlaminar fracture toughness and static strength, and has a problem of limiting a weight reduction effect due to introduction of a metal wire.

There has been proposed a laminate in which a nonwoven fabric formed of carbon fibers is disposed between layers (see Patent Document 7 and Non-Patent Documents 1 and 2). However, with the carbon fibers and nonwoven fabric used here, the interlayer becomes a fragile layer. Therefore, all of excellent interlaminar fracture toughness, excellent static strength and excellent conductivity is not satisfied. Patent Document 7 discloses a laminate of a triaxial woven fabric and a nonwoven fabric. When the nonwoven fabric is conductive, electrical characteristics may be enhanced, but this document neither discloses nor suggests characteristics related to interlaminar toughness.

Non-Patent Documents 1 and 2 disclose a laminate in which a nonwoven fabric formed of carbon fibers is disposed between layers. These documents show that shear mode interlaminar fracture toughness (GIIc) is improved and that for improving opening mode interlaminar fracture toughness (GIc), a nonwoven fabric should be inserted in a large amount, so that 0 degree tensile strength as an indicator of static strength decreases by about 30%.

Patent Document 8 discloses a prepreg in which nonwoven fabric layers are disposed on both sides of a continuous fiber layer having a thickness of 0.3 to 0.5 mm. However, this technique is a technique for suppressing orientation disorder between continuous fiber layers to provide a molded product excellent in physical properties and design characteristics, and this document neither discloses nor suggests interlaminar toughness and conductivity. Further, it is shown that mechanical properties are deteriorated when a nonwoven fabric is disposed between layers, and for retaining mechanical properties, a layer provided with no nonwoven fabric is required. In this case, a weaker one of an interlayer provided with a nonwoven fabric and an interlayer provided with no nonwoven fabric starts to undergo interlaminar fracture first, and therefore improvement of interlaminar fracture toughness cannot be expected.

Patent Document 9 discloses a composite reinforced fiber base in which a nonwoven fabric of a thermoplastic resin is disposed on a carbon fiber base and fibers of the nonwoven fabric penetrate through the carbon fiber base. However, this nonwoven fabric is intended to improve disorder of fiber orientation, handling characteristics during molding and impact resistance of a molded product, and conductivity is not mentioned in this document. Further, there is the problem that physical properties of the molded product are not stable because nylon fibers are melted and softened during processing.

Patent Documents 10 and 11 disclose carbon fiber bundles in a nonwoven fabric but do not teach dispersing the carbon short fibers in the form of monofilaments.

Non-Patent Documents 4 to 7 disclose hybrid composite materials of fiber reinforced plastics composite materials and nonwoven carbon tissue. None of these documents disclose or teach the dispersion of the carbon short fibers in the form of monofilaments.

In the situations described above, development of a carbon-fiber-reinforced composite material satisfying all of excellent interlaminar fracture toughness, excellent static strength and excellent conductivity and provision of the carbon-fiber-reinforced composite material to the market are desired.

### PRIOR ART DOCUMENTS

### PATENT DOCUMENTS

Patent Document 1: JP 08-259713 A
Patent Document 2: JP 3387100 B2
Patent Document 3: JP 2003-019763 A
Patent Document 4: JP 06-344519 A
Patent Document 5: JP 08-034864 A
Patent Document 6: JP 2006-265769 A
Patent Document 7: WO 02/018127 A1
Patent Document 8: JP 10-138375 A
Patent Document 9: JP 2010-155460 A
Patent Document 10: JP 2007-268735 A
Patent Document 11: JP S60-44334 A

### NON-PATENT DOCUMENTS

Non-Patent Document 1: Japan Society of Mechanical Engineers Collected Papers (A), vol. 67, pp. 1471-1476 (2001)
Non-Patent Document 2: Japan Society of Mechanical Engineers Collected Papers (A), vol. 67, pp. 1477-1485 (2001)
Non-Patent Document 3: Polymer Composites, vol. 24, pp. 380-390 (2003)
Non-Patent Document 4: Journal of Materials Processing Technology, vol. 207, no. 1-3, pp. 21-29 (2008)
Non-Patent Document 5: International Journal of Fatigue, vol. 24, no. 2-4, pp. 397-405 (2002)
Non-Patent Document 6: Scripta Materialia, vol. 41, no. 6, pp. 575-582 (1999)
Non-Patent Document 7: Composites Part A: Applied Science and Manufacturing, vol. 42, no. 10, pp. 1551-1559 (2011)

### SUMMARY OF THE INVENTION

### PROBLEMS TO BE SOLVED BY THE INVENTION

In view of the problems of conventional techniques, an object of the present invention is to provide a carbon fiber base and a prepreg which are suitable for formation of a carbon-fiber-reinforced composite material having all of excellent interlaminar fracture toughness, excellent static strength and excellent conductivity. Further, an object of the present invention is to provide a carbon-fiber-reinforced composite material having all of excellent interlaminar fracture toughness, excellent static strength and excellent conductivity.

Values of interlaminar fracture toughness, static strength and conductivity which the carbon-fiber-reinforced composite material of the present invention is desired to have vary depending on a use and design of a component formed by using the carbon-fiber-reinforced composite material, but for exhibiting excellent weight reduction characteristics of the carbon-fiber-reinforced composite material, for example in the case of an aircraft component, those values are such that a component can be obtained in which 85% or more of strength is retained in terms of static strength such as 0 degree flexural strength, opening mode interlaminar fracture toughness (GIc) and shear mode interlaminar fracture toughness (GIIc) are each increased by 20% or more, and conductivity in a thickness direction is increased by a factor of 4 or more as compared to an interlaminar non-reinforced carbon-fiber-reinforced composite material.

### SOLUTIONS TO THE PROBLEMS

A carbon fiber base of the present invention includes a continuous carbon fiber layer formed of continuous carbon fibers, and a carbon short fiber web in which carbon short fibers having an average fiber length of 2 to 12 mm are dispersed in the form of monofilaments, the carbon short fiber web provided on one or both of the surfaces of the continuous carbon fiber layer.

In the carbon fiber base of the present invention, preferably the carbon short fiber web has a spring back property.

In the carbon fiber base of the present invention, preferably the carbon short fiber web has a weight per unit area of 1 to 10 g/m².

In the carbon fiber base of the present invention, preferably the carbon short fibers in the carbon short fiber web have an average fiber diameter of 1 to 20 µm.

A prepreg of the present invention is formed by impregnating a part or the whole of the carbon fiber base of the present invention with a matrix resin.

In the prepreg of the present invention, preferably the carbon short fiber web in a molded product obtained by subjecting the prepreg to heat-and-pressure molding has a thickness of 60 µm or less.

In the prepreg of the present invention, preferably the matrix resin is an epoxy resin.

A carbon fiber base laminate can be formed by laminating the carbon fiber base of the present invention in two or more layers in a thickness direction.

A prepreg laminate can be formed by laminating the prepreg of the present invention in two or more layers in a thickness direction.

A carbon-fiber-reinforced composite material of the present invention is formed by integrating the carbon fiber base of the present invention with a matrix resin.

Another carbon-fiber-reinforced composite material of the present invention is formed by integrating the carbon fiber base laminate with a matrix resin.

### EFFECTS OF THE INVENTION

A carbon-fiber-reinforced composite material produced by using a carbon fiber base or a prepreg of the present invention has all of excellent interlaminar fracture toughness, excellent static strength and excellent conductivity.

### BRIEF DESCRIPTION OF THE DRAWINGS

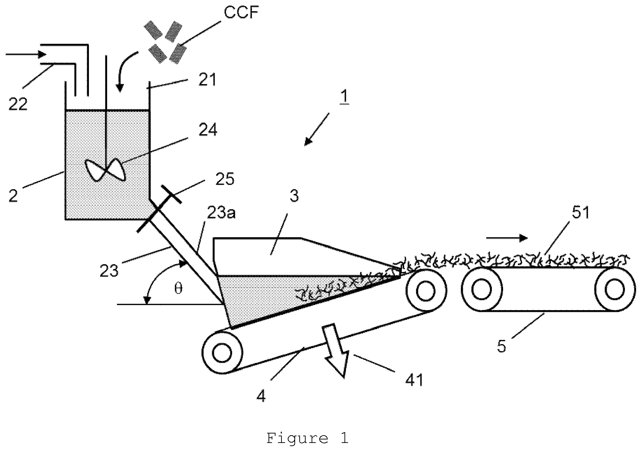

Fig. 1 is a side schematic view of one example of an apparatus for producing a carbon short fiber web to be used for a carbon fiber base of the present invention.

### EMBODIMENTS OF THE INVENTION

A carbon fiber base of the present invention includes a continuous carbon fiber layer formed of continuous carbon fibers, and a carbon short fiber web in which carbon short fibers having an average fiber length of 2 to 12 mm are dispersed in the form of monofilaments, the carbon short fiber web provided on one or both of the surfaces of the continuous carbon fiber layer. Next, a preferred method for producing the carbon fiber base of the present invention will be described.

The type of carbon fibers that form the carbon fiber base is not particularly limited. For example, polyacrylonitrile (PAN)-based carbon fibers, pitch-based carbon fibers and rayon-based carbon fibers etc. are preferably used from the viewpoint of improvement of dynamic properties and weight reduction of an intended carbon-fiber-reinforced composite material. Two or more of above-mentioned carbon fibers may be used in combination. Among them, PAN-based carbon fibers are particularly preferably used from the viewpoint of a balance between the strength and the elastic modulus of an intended carbon-fiber-reinforced composite material.

Carbon fibers are usually produced in the following manner. For production of PAN-based carbon fibers, precursor fibers to be carbonized into carbon fibers are used. As the precursor fiber, a fiber bundle including a large number of fibers formed from a PAN-based copolymer having 90% by mass or more of acrylonitrile and less than 10% by mass of a monomer capable of being copolymerized with acrylonitrile is preferably used.

As the monomer capable of being copolymerized, for example, at least one selected from the group consisting of acrylic acid, methacrylic acid, itaconic acid or a methyl ester, a propyl ester, a butyl ester, an alkali metal salt and an ammonium salt thereof, an ally sulfonic acid, a metallyl sulfonic acid, a styrene sulfonic acid and an alkali salt thereof can be used.

The monofilament fineness of the PAN-based precursor fiber bundle is preferably 1 to 2 dtex, more preferably 1.1 to 1.7 dtex, further preferably 1.2 to 1.5 dtex. When the monofilament fineness is less than 1 dtex, the elastic modulus and strength of the resulting carbon fiber bundle are excessively high, and productivity tends to be deteriorated. When the monofilament fineness is more than 2 dtex, carbonization unevenness easily occurs in a carbonization step, so that the strength of the resulting carbon fiber bundle may be reduced. The PAN-based precursor fiber bundle is heated to be made flame-resistant in an oxidative atmosphere such as that of air preferably at a temperature of 200 to 300°C, thereby producing a flame-resistant fiber bundle.

The resulting flame-resistant fiber bundle is subjected to a preliminary carbonization treatment in an inert atmosphere such as that of nitrogen preferably at a temperature of 300 to 1000°C. The resulting flame-resistant fiber bundle, which has been subjected to the preliminary carbonization treatment, is subjected to a carbonization treatment in an inert atmosphere such as that of nitrogen at a maximum temperature of preferably 1000 to 1400°C, more preferably 1000 to 1300°C, further preferably 1100 to 1250°C to produce a carbon fiber bundle.

When the maximum carbonization temperature is higher than 1400°C, the elastic modulus of the carbon fiber bundle is excessively high, and when the maximum carbonization temperature is lower than 1000°C, the carbon crystal size of carbon fibers decreases, so that the resulting carbon fiber bundle has a high moisture content because of insufficient growth of the carbon crystal. When the carbon fiber bundle has a high moisture content, the tensile strength of the resulting carbon-fiber-reinforced composite material may not be sufficiently exhibited because curing of the matrix resin is insufficient at the time of forming the carbon-fiber-reinforced composite material using the carbon fiber bundle.

Examples of the commercial available product of the carbon fiber bundle include TORAYCA (registered trademark) "T800SC-24K" and TORAYCA (registered trademark) "T700SC-12K" (both manufactured by Toray Industries, Inc.).

The monofilament fineness of each carbon fiber in the carbon fiber bundle to be used for formation of the carbon fiber base of the present invention is preferably 0.2 to 2 dtex, more preferably 0.4 to 1.8 dtex. When the monofilament fineness is less than 0.2 dtex, damage of the carbon fiber bundle may easily occur due to contact with a guide roller at the time of twisting the carbon fiber bundle, and similar damage may occur in a resin impregnation treatment step of impregnating the carbon fiber bundle with a matrix resin. When the monofilament fineness is more than 2 dtex, the carbon fiber bundle may not be sufficiently impregnated with a matrix resin, and resultantly the fatigue resistance of the resulting carbon-fiber-reinforced composite material may be reduced.

The carbon fiber bundle is preferably one that has been subjected to a sizing treatment. As a sizing agent, a sizing agent including a component having at least one functional group selected from an epoxy group, a hydroxyl group, an acrylate group, a methacrylate group, an amide group, a carboxyl group and a carboxylic anhydride is preferably used. The sizing agent is deposited on the carbon fiber bundle in an amount of preferably 0.01 to 5% by mass. A carbon fiber bundle, on which a sizing agent is deposited, is excellent in abrasion resistance in the production process of the carbon fiber base, or excellent in affinity with a matrix resin, especially an epoxy resin in the production process of the carbon-fiber-reinforced composite material.

The continuous carbon fiber refers to a carbon fiber bundle formed such that a large number of carbon filaments having a length corresponding to the size of a carbon fiber base to be produced are aligned. Therefore, the continuous carbon fiber is different from carbon short fiber sheet formed such that a large number of carbon filaments cut in the form of short fibers are randomly situated.

Forms of continuous carbon fibers that form a continuous carbon fiber layer in the carbon fiber base of the present invention include a unidirectional sheet with continuous carbon fibers aligned in one direction, a woven fabric formed of continuous carbon fibers, and a tow or robing formed of continuous carbon fibers.

Preferably the carbon fiber bundle that forms a continuous carbon fiber has 2500 to 50000 carbon filaments per fiber bundle for securing stability of an arrangement state of carbon filaments in the carbon fiber bundle and securing impregnation properties of a matrix resin into the carbon fiber bundle.

The carbon fiber base of the present invention is used for production of a carbon fiber base laminate, i.e. a preform. Here, the preform refers usually to a laminate formed by laminating a plurality of woven base fabrics formed of continuous carbon fibers, or a laminate formed by laminating a plurality of woven base fabrics and suturing the woven base fabrics with a stitch thread to be integrated, or a fiber structure such as a three dimensional woven fabric or braided fabric formed of continuous carbon fibers.

The carbon short fiber web in the carbon fiber base of the present invention refers to a web formed such that carbon short fibers having an average fiber length of 2 to 12 mm are dispersed in the form of monofilaments. The carbon short fiber web has voids that are impregnated with a matrix resin among a large number of carbon short fibers. Here, the web refers to a nonwoven fabric in which cut carbon fibers, i.e. carbon short fibers form a network of carbon short fibers in a dispersed state. In the carbon short fiber web, carbon short fibers may be mixed with organic fibers, an organic compound or an inorganic compound, carbon short fibers may be sealed together with other components, or carbon short fibers may be bonded together with a resin component.

For easily producing a web with carbon short fibers dispersed in the form of monofilaments, the form of the carbon short fiber web is preferably a form of a nonwoven fabric which is obtained by a dry method or a wet method and in which short fibers are sufficiently opened and short fibers are bonded together with a binder resin formed of an organic compound. Carbon fibers to be used for formation of the carbon short fiber web may be the same as or different from carbon fibers to be used for formation of the continuous carbon fiber layer formed of continuous carbon fibers.

The carbon short fiber web is a web which is formed of carbon short fibers having an average fiber length of 2 to 12 mm and in which carbon short fibers are dispersed in the form of monofilaments. The carbon short fiber web has a strong network of carbon short fibers and has a spring back property described later.

Non-Patent Documents 1 and 2 disclose a laminate in which a nonwoven fabric formed of carbon fibers is disposed between layers, and the reason why interlaminar fracture toughness (GIc) of the laminate is not improved is considered to be shortage of fiber bridges by monofilaments oriented in an out-of-plane direction. The carbon fibers in the nonwoven fabric of carbon fibers used in Non-Patent Documents 1 and 2 have a large fiber length of about 25 mm (this fiber length is described in Non-Patent Document 3), and it is thought that when the fiber length is large, entanglement of fibers is promoted to reduce the number of fiber ends, so that monofilaments oriented in an out-of-plane direction decreases, resulting in shortage of fiber bridges.

Since a large proportion of carbon fibers in the nonwoven fabric exists in the form of fiber bundles, carbon fibers are hard to penetrate between continuous fiber layers, and this may also cause shortage of fiber bridges. Therefore, for increasing fiber bridges, a thicker nonwoven fabric is required, and thus the interlayer thickness in a molded product increases, leading to a reduction in static strength of the molded product.

In the carbon short fiber web to be used in the carbon fiber base of the present invention, carbon short fibers having a fiber length in a fixed range, i.e. an average fiber length of 2 to 12 mm are dispersed in a monofilament level. Owing to this state, carbon short fibers that form the web effectively penetrate between adjacent continuous carbon fiber layers. Owing to this state, a conductivity path is formed between layers to improve conductivity, and also monofilaments between layers effectively form fiber bridges with one another to provide high interlaminar fracture toughness.

Further, a carbon short fiber web with carbon short fibers dispersed in the form of monofilaments has a spring back property. Thus, carbon short fibers of the web more easily penetrate between adjacent continuous carbon fiber layers, and due to this penetration, the strength of the web is kept high, and resultantly the interlayer thickness can be reduced. As the interlayer thickness decreases, high static strength is imparted to the resulting carbon-fiber-reinforced composite material.

Here, the carbon short fiber web having a spring back property means that one of the following two requirements is satisfied.

The first requirement is that where t₀ is an initial thickness of a web, t₁ is a thickness with a load applied to the web and t₂ is a thickness with a load removed after applying the load to the web, the following relationships are satisfied: t₁ < 0.75 × t₀ (formula 1) and t₂ > 0.9 × t₀ (formula 2) .

The method for measuring an initial thickness and a thickness with a load removed is not particularly limited. For example, the thickness can be measured by a micrometer or slide gage, a three-dimensional measurement device, a laser displacement laser or microscopic observation.

Here, microscopic observation may be performed by directly observing the web, or by embedding the web with a thermosetting resin, and polishing and then observing the cross section. The method for measuring a thickness when a load is applied is not particularly limited. For example, the thickness can be measured by applying a load to the web by a flexural tester or a compression tester and reading a displacement. However, when the web is strongly bonded with a binder, or the thickness of the web is very small, or the web is impregnated with a matrix resin, it may be difficult to perform measurement. In this case, a spring back property is determined by checking whether the second requirement is satisfied.

The second requirement is that where t₃ is a thickness of a web in a molded product obtained by performing heat-and-pressure molding after impregnating the web with a matrix resin, and t₄ is a thickness of the web when the matrix resin in the molded product is melted or burned out to be removed, the following relationship is satisfied: t₄ > 1.5 × t₃ (formula 3). Alternatively, where t₃ is a thickness of a layer formed of a web in a molded product obtained by subjecting a prepreg formed from a continuous carbon fiber layer formed of continuous carbon fibers, a carbon short fiber web and a matrix resin to heat-and-pressure molding, and t₄ is a thickness of the layer formed of a web when the matrix resin in the molded product is melted or burned out to be removed, the following relationship is satisfied: t₄ > 1.5 × t₃ (formula 3) .

The method for measuring the thickness is not particularly limited. For example, the thickness can be measured by a micrometer or slide gage, a three-dimensional measurement device, a laser displacement laser or microscopic observation. Here, in the case of microscopic observation, the molded product or the web may be directly observed, or the molded product or the web may be embedded with a thermosetting resin, and the cross section polished and then observed.

For the carbon short fiber web to show a spring back property, it is important that carbon short fibers existing therein are dispersed in the form of monofilaments . When carbon short fibers are dispersed in the form of monofilaments, the number of contacts between carbon short fibers increases, and therefore the web has a more clearly three dimensional structure. That is, a force with which the web is expanded in a height direction increases, so that carbon short fibers of the web easily penetrate between adjacent continuous carbon fiber layers.

The average fiber length of carbon short fibers in the carbon short fiber web is 2 to 12 mm. When the average fiber length of carbon short fibers is less than 2 mm, the network structure of the web is not adequately obtained, and interlaminar strength decreases, leading to existence of a fragile layer, so that the static strength of the resulting carbon-fiber-reinforced composite material is reduced. Further, it may become difficult to form fiber bridges, leading to a reduction in interlaminar fracture toughness and conductivity of the resulting carbon-fiber-reinforced composite material. In addition, processability of the web is deteriorated because the network structure of the web is hard to be retained.

On the other hand, when the average fiber length of carbon short fibers is more than 12 mm, entanglement of carbon short fibers is promoted, so that the shape of the web is easily fixed, leading to suppression of the spring back property. Further, the number of ends of carbon short fiber monofilaments is reduced. As a result, the number of ends of monofilaments oriented in an out-of-plane direction is reduced, and a capability of carbon short fibers to penetrate between adjacent continuous carbon fiber layers is deteriorated. As a result, fiber bridges and conductivity paths are hard to be formed, so that a sufficient effect of improving the interlaminar fracture toughness and conductivity of the resulting carbon-fiber-reinforced composite material is not obtained.

Further, as the average fiber length of carbon short fibers is increased, the interlayer thickness becomes large, leading to a reduction in static strength of the carbon-fiber-reinforced composite material. For the resulting carbon-fiber-reinforced composite material to have all of excellent interlaminar fracture toughness, excellent static strength and excellent conductivity, it is important that in a carbon short fiber web, the average fiber length of carbon short fibers is 2 to 12 mm, and carbon short fibers are dispersed in a level of monofilaments. Further, it is preferred that the carbon short fiber web has a spring back property.

Examples of the method for measuring the fiber length of a carbon short fiber include a method comprising extracting a carbon short fiber directly from a web, and measuring the length of the extracted fiber, and a method comprising dissolving a resin using a solvent that dissolves only the resin of a prepreg or a carbon-fiber-reinforced composite material, separating carbon short fibers of the remaining carbon fibers by filtration, and measuring the length of the obtained carbon short fiber by microscopic observation (dissolution method). When a solvent that dissolves a resin is absent, a method in which at a temperature range that does not cause carbon fibers to be oxidized to loose weight, only the resin is burned out to separate carbon fibers, and the length of the obtained carbon short fiber is measured by microscopic observation (burnout method).

For measurement of the length, 400 carbon short fibers are randomly selected, the lengths thereof are measured to the order of 1 µm with an optical microscope, and a value of each fiber length and a ratio of the measured length of each fiber for each length are acquired. When comparing the method comprising extracting a carbon short fiber directly from a web and the method comprising extracting a carbon short fiber from a prepreg or a carbon-fiber-reinforced composite material by a dissolution method or a burnout method, there is no particular difference in obtained results as long as conditions are appropriately selected.

Dispersion of carbon short fibers in the form of monofilaments in a carbon short fiber web means that 90% of randomly selected carbon short fibers in terms of a number are dispersed one by one in the form of monofilaments, i.e. that two or more carbon short fibers are not arranged in the same direction while getting close to one another.

As carbon short fibers are dispersed in the form of monofilaments, the network of the web is strengthened, isotropy of the web is achieved, and the thickness of the web can be reduced, so that a web having high strength and an excellent spring back property can be obtained. When carbon short fibers are not dispersed in the form of monofilaments, isotropy of the web is deteriorated, dispersion unevenness and defects of carbon short fibers occur, and the thickness of the web is hard to be reduced, so that satisfactory mechanical properties cannot be obtained. Further, it becomes difficult to form a network of carbon short fibers, the dead weight of carbon short fibers is increased, the spring back property is reduced, fiber bridges are decreased, and the effect of improving the interlaminar fracture toughness of the resulting carbon-fiber-reinforced composite material is reduced.

Dispersion of carbon short fibers in the form of monofilaments can be confirmed by observing a web or a prepreg with an optical microscope or a scanning electron microscope. For assessment on a dispersed state of carbon short fibers, 100 carbon short fibers are randomly selected, and whether or not 90 or more fibers thereof are dispersed in the form of monofilaments is checked, and when a state is observed in which 90 or more fibers are dispersed in the form of monofilaments, it is determined that carbon short fibers are dispersed in the form of monofilaments.

Production of a carbon short fiber web with carbon short fibers dispersed in the form of monofilaments is performed by dispersing carbon short fibers and two-dimensionally arranging carbon short fibers using a dry method or wet method described below.

For enhancing dispersion of carbon short fibers, a method comprising using a fiber opening bar, a method comprising vibrating the fiber opening bar used, a method comprising finning the aperture of a card, and a method comprising adjusting the rotation speed of the card can be used in combination in the dry method.

In the wet method, a method comprising adjusting stirring conditions at the time of dispersing carbon short fibers, a method comprising reducing the concentration of carbon short fibers in a solution, a method comprising adjusting a solution viscosity and a method comprising suppressing a vortex flow in a dispersion tank at the time of supplying a dispersion medium (dispersion liquid) can be used in combination.

For two-dimensionally arranging carbon short fibers, a method comprising using static electricity at the time of integrating carbon short fibers, a method comprising using rectified air, and a method comprising adjusting the take-over speed of a conveyor can be used in combination in the dry method. In the wet method, a method comprising preventing reaggregation of dispersed carbon short fibers by ultrasonic waves or the like, a method comprising adjusting a filtration rate, a method comprising adjusting the mesh diameter of a conveyor, and a method comprising adjusting the take-over speed of a conveyor can be used in combination.

When the wet method is used, for example, a web producing apparatus illustrated in Fig. 1 can be used. Although explanations of the web producing apparatus illustrated in Fig. 1 are described later, the weight of carbon short fibers per unit of the resulting web can be adjusted by adjusting the concentration at which the production apparatus is charged with chopped carbon fibers as a raw material for production of the web.

Further, the weight of carbon short fibers per unit area can also be adjusted by adjusting the flow rate (flow) of a dispersion liquid and the speed of a mesh conveyor. For example, by increasing the flow rate of the dispersion liquid with the speed of the mesh conveyor kept constant, the weight of carbon short fibers per unit area of the resulting web can be increased. Conversely, by decreasing the flow rate of the dispersion liquid with the speed of the mesh conveyor kept constant, the weight of carbon short fibers per unit area of the resulting web can be decreased.

Further, by adjusting the speed of the mesh conveyor with respect to the flow rate of the dispersion liquid, the orientation direction of carbon short fibers can be controlled. For example, by increasing the speed of the mesh conveyor with respect to the flow rate of the dispersion liquid, carbon short fibers in the resulting web are easily oriented in the take-over direction of the mesh conveyor. Thus, carbon short fiber webs with carbon short fibers arranged in various states can be produced by adjusting various operation conditions in the web producing apparatus illustrated in Fig. 1.

Preferably the carbon short fiber web in the carbon fiber base is provided on one or both of the surfaces of a continuous carbon fiber layer in the carbon fiber base such that the thickness of a layer formed of a carbon short fiber web in a molded product obtained by subjecting to heat-and-pressure molding a prepreg formed by impregnating the carbon fiber base with a matrix resin is 60 µm or less. The thickness of the layer formed of a carbon short fiber web in the molded product after heat-and-pressure molding is more preferably 50 µm or less, further preferably 40 µm or less. When the thickness of this layer is 60 µm or less, the interlayer is inhibited from becoming a fragile layer, so that excellent interlaminar fracture toughness and excellent conductivity of the resulting carbon-fiber-reinforced composite material can be achieved while interlaminar strength is retained.

The method for measuring a thickness of the layer formed of a carbon short fiber web is not particularly limited. For example, the thickness can be measured by microscopically observing the cross section of a molded product obtained by subjecting a prepreg to heat-and-pressure molding. Here, microscopic observation may be performed by directly observing the cross section of the molded product, or by embedding the molded product with a thermosetting resin, and polishing and then observing the cross section.

The weight per unit area of the carbon short fiber web is preferably 1 to 10 g/m², more preferably 2 to 8 g/m², further preferably 3 to 6 g/m². When the weight per unit area of the carbon short fiber web is in the above-mentioned range, formation of sufficient conductivity paths due to formation of fiber bridges and an interlaminar reinforcement effect are provided, and static strength can be inhibited from being reduced as the interlayer becomes a fragile layer. Workability of a process of producing a carbon short fiber web and a step of disposing a carbon short fiber web on a continuous carbon fiber layer can be properly maintained.

The average fiber diameter of carbon short fibers that form the carbon short fiber web is preferably in a range of 1 to 20 µm, more preferably in a range of 3 to 15 µm. When the average fiber length of carbon short fibers is in this range, the strength of the carbon short fiber web is retained, the static strength of the resulting carbon-fiber-reinforced composite material is suppressed, and excellent interlaminar fracture toughness is achieved.

Preferably carbon short fiber monofilaments that form the carbon short fiber web are bonded together with a binder resin. Consequently, handling characteristics and productivity of the carbon short fiber web are improved, and the network structure of carbon short fibers in the web is satisfactorily formed.

The type of the binder resin is not particularly limited. For example, a thermoplastic resin such as polyvinyl alcohol, an ethylene-propylene copolymer, an ethylene-vinyl acetate copolymer, polyvinyl chloride, polyvinylidene chloride, polyvinyl acetate, a polycarbonate resin, a styrene-based resin, a polyamide-based resin, a polyester-based resin, a polyphenylene sulfide resin, a modified polyphenylene ether resin, a polyacetal resin, a polyetherimide resin, a polypropylene resin, a polyethylene resin, a fluororesin, a thermoplastic acrylic resin, a thermoplastic polyester resin, a thermoplastic polyamidimide resin, an acrylonitrile-butadiene copolymer, a styrene-butadiene copolymer or an acrylonitrile-styrene-butadiene copolymer, or a thermosetting resin such as a urethane resin, a melamine resin, a urea resin, a thermosetting acrylic resin, a phenol resin, an epoxy resin or a thermosetting polyester is preferably used.

As the binder resin, a thermoplastic resin is more preferably used from the viewpoint of retention of the shape of the carbon short fiber web. A thermoplastic resin having at least one functional group selected from an epoxy group, a carboxyl group, an acid anhydride, an amino group and an imine group is preferably used from the viewpoint of dynamic properties of the resulting carbon-fiber-reinforced composite material. These binder resins may be used alone or in combination of two or more thereof.

The matrix resin to be used for formation of the prepreg of the present invention or formation of the carbon-fiber-reinforced composite material of the present invention is not particularly limited. As the matrix resin, either a thermosetting resin or a thermoplastic resin can be used. A thermosetting resin, particularly an epoxy resin is preferably used from the viewpoint of impregnation properties of the resin into carbon fibers and dynamic properties of the resulting carbon-fiber-reinforced composite material. Besides an epoxy resin alone, a copolymer of an epoxy resin and other thermosetting resin, a modified product thereof, and a blend of these resins can be used.

Examples of the thermosetting resin to be copolymerized with an epoxy resin include unsaturated polyester resins, vinyl ester resins, benzoxazine resins, phenol resins, urea resins, melamine resins and polyimide.

Examples of the epoxy resin include glycidyl ether type epoxy resins, glycidyl amine type epoxy resins, glycidyl ester type epoxy resins and cycloaliphatic epoxy resins.

Examples of the glycidyl ether type epoxy resin include bisphenol A type epoxy resins, bisphenol F type epoxy resins, bisphenol AD type epoxy resins, halogenated bisphenol A type epoxy resins, bisphenol S type epoxy resins, resorcinol type epoxy resins, hydrogenated bisphenol A type epoxy resins, aliphatic epoxy resins, phenol novolak type epoxy resins, cresol novolak type epoxy resins, naphthalene type epoxy resins, biphenyl type epoxy resins, biphenyl aralkyl type epoxy resins and dicyclopentadiene type epoxy resins.

Examples of the glycidyl ester type epoxy resin include hexahydrophthalic acid glycidyl esters and dimer acid diglycidyl ethers.

Examples of the glycidyl amine type epoxy resin include triglycidyl isocyanurate, tetraglycidyl diaminodiphenylmethane, tetraglycidyl meta-xylenediamine and aminophenol type epoxy resins. Tetraglycidyl diaminodiphenylmethane is excellent in heat resistance, and is therefore especially preferably used as an epoxy resin composition for a matrix resin of a carbon-fiber-reinforced composite material that is used for an aircraft structural material or the like.

Examples of the cycloaliphatic epoxy resin include 3,4-epoxy-6-methylcyclohexylmethyl carboxylate and 3,4-epoxycyclohexylmethyl carboxylate.

These epoxy resins may be used alone or as a mixture of two or more thereof. An epoxy resin composition containing at least a difunctional epoxy resin and a tri-or-more functional epoxy resin has both resin-specific fluidity and heat resistance after curing, and is therefore preferably used. An epoxy resin composition containing at least one of epoxy resins that are liquid at normal temperature and at least one of epoxy resins that are solid at normal temperature can impart proper tackiness and drape properties to a prepreg, and is therefore preferably used.

The epoxy resin is used with a curing agent blended therein. The curing agent is a compound having an active group capable of reacting with an epoxy group. Examples of the curing agent include various kinds of isomers of dicyandiamide, diaminodiphenylmethane and diaminodiphenylsulfone, aminobenzoic acid esters, various kinds of anhydrides, phenol novolak resins, cresol novolak resins, polyphenol compounds, imidazole derivatives, aliphatic amines, tetramethylguanidine, thiourea addition amines, carboxylic anhydrides such as a methylhexahydrophthalic anhydride, carboxylic acid hydrazide, carboxylic acid amide, polymercaptan, and Lewis acid complexes such as a boron trifluoride ethylamine complex.

When an aromatic diamine is used as a curing agent, an epoxy resin cured product having proper heat resistance is obtained. Particularly, various kinds of isomers of diaminodiphenylsulfone are preferably used because an epoxy resin cured product having proper heat resistance is obtained.

When a curing agent formed of a combination of dicyandiamide as a curing agent and a urea compound, for example 3,4-dichlorophenyl-1,1-dimethylurea, as a curing accelerator, or a curing agent formed of an imidazole is used, a curing reaction proceeds at a relatively low temperature and the cured resin has high heat resistance and water resistance. By curing an epoxy resin using an acid anhydride, a cured product having a low water absorption rate can be obtained as compared to curing with an amine compound. In addition, a latent form of these curing agents, for example a microcapsulated form is excellent in storage stability of the resin, so that the tackiness and drape property of the resin are hardly changed even when the resin is left standing at room temperature.

The added amount of the curing agent varies depending on a type of the epoxy resin and curing agent. For example, in the case of an aromatic amine curing agent, it is preferred to add the curing agent in a stoichiometrically equivalent amount, but by employing an equivalent ratio of 0.7 to about 0.8, a resin having a high elastic modulus is obtained as compared to a case where the curing agent is used in an equivalent amount. These curing agents may be used alone, or used in combination of two or more thereof.

An epoxy resin and a curing agent, or a product obtained by preliminarily reacting a part of the epoxy resin and curing agent can also be blended in a resin composition. This method may be effective for adjustment of viscosity and improvement storage stability.

A resin composition with a thermoplastic resin mixed with or dissolved in an epoxy resin is also preferably used. Examples of the preferred thermoplastic resin to be used for the resin composition include thermoplastic resins having in a main chain a bond selected from the group consisting of a carbon-carbon bond, an amide bond, an imide bond, an ester bond, an ether bond, a carbonate bond, a urethane bond, a thioether bond, a sulfone bond and a carbonyl bond, or an alcoholic hydroxyl group. The thermoplastic resin may have in part a crosslinked structure. The thermoplastic resin may have crystallinity, or may be amorphous.

In particular, preferably at least one resin selected from the group consisting of a polyvinyl acetal resin such as polyvinyl formal or polyvinyl butyral, polyvinyl alcohol, a phenoxy resin, polyamide, polycarbonate, polyacetal, polyphenylene oxide, polyphenylene sulfide, polyarylate, polyester, polyamide imide, polyimide, polyether imide, polyimide having a phenyl trimethyl indane structure, polysulfone, polyether sulfone, polyether ketone, polyether ether ketone, poryaramide, polyether nitrile and polybenzimidazole is mixed with or dissolved in an epoxy resin.

As the above-mentioned thermoplastic resin, a commercially available polymer may be used, or an oligomer, which has a molecular weight lower than that of a commercially available polymer, may be used. As the oligomer, an oligomer having a functional group, which can react with an epoxy resin, at an end or in a molecule chain is preferred.

A mixture of an epoxy resin and a thermoplastic resin may have better resin characteristics as compared to a case where the epoxy resin and the thermoplastic resin are used individually. The mixture may be a well-balanced base resin in which toughness of the thermoplastic resin compensates fragility of the epoxy resin and the epoxy resin compensates difficulty of molding of the thermoplastic resin.

Preferably the epoxy resin, curing agent and thermoplastic resin etc. are used as an epoxy resin composition kneaded beforehand. Preferably the epoxy resin composition is prepared by uniformly heating and kneading components other than a curing agent and a curing accelerator at a temperature of about 150°C, cooling the mixture to a temperature at which a curing reaction is hard to proceed, then adding the curing agent and the curing accelerator, and kneading the mixture, but the method for blending the components is not limited to this method.

Examples of the method for forming a molding material by combining the carbon fiber base of the present invention with a matrix resin include a method comprising forming a molding material while impregnating the carbon fiber base with a matrix resin during molding of the molding material, and a method comprising impregnating the carbon fiber base with a matrix resin beforehand, and forming a molding material using the carbon fiber base impregnated with the matrix resin.

Examples of the method for molding a molding material by combining an epoxy resin composition as a matrix resin with the carbon fiber base during molding of the molding material include a hand lay-up method, a spray-up method, a resin transfer molding method and a resin film infusion method. Examples of the method for forming a molding material by impregnating the carbon fiber base with an epoxy resin composition beforehand include a method comprising performing molding using a prepreg with the carbon fiber base impregnated with an epoxy resin composition as a matrix resin.

The hand lay-up method is a method comprising mounting the carbon fiber base beforehand in a mold in conformity with the shape of the mold, impregnating the mounted carbon fiber base with a resin by a brush or a roller, and sequentially laminating the carbon fiber base up to a predetermined thickness while defoaming the carbon fiber base, followed by curing the resin in the mold.

The spray-up method is a method comprising spraying a resin in conformity with the mold shape of a mold using a spray-up machine while cutting the carbon fiber base into an appropriate length, and curing the resin in the mold after attainment of a predetermined thickness.

The resin transfer molding (RTM) method is a method comprising mounting the carbon fiber base in a mold in conformity with the shape of the mold beforehand, clamping the mold, then injecting a resin into the closed mold to impregnate carbon fiber base housed in the mold with the resin, and curing the resin in the mold. Preferably the mold and the resin are warmed beforehand. The temperature at which the mold and the resin are warmed is determined from a relationship between the initial viscosity and viscosity rise of the resin, and is preferably in a range of 40 to 70°C, more preferably in a range of 50 to 60°C, from the viewpoint of impregnation properties of the resin into the carbon fiber base.

In the RTM method, carbon fiber bases processed into forms such as those of a mat, a woven fabric, a knit, a braid, and a sheet with continuous carbon fibers aligned in one direction are preferably used. Among them, carbon fiber bases in the form of a woven fabric, from which a carbon-fiber-reinforced composite material having a high carbon fiber content is easily obtained and which are excellent in handling characteristics, are preferably used.

In the RTM method, for example, a mold having a plurality of resin inlets is provided, and a resin is injected into the mold through the plurality of inlets in parallel or in succession at different times, and in this way, it is preferred to appropriately select molding conditions depending on a carbon-fiber-reinforced composite material to be obtained because a degree of freedom can be obtained such that molding of molded products having various shapes and sizes can be dealt with. The number and shape of inlets are not limited, but for enabling the resin to be injected in a short time, the greater the number of inlets, the better, and it is preferred to dispose the inlets at positions that allow the flow length of the resin to be reduced depending on a shape of a molded product.

In the RTM method, the injection pressure of a resin composition is usually 0.1 to 1.0 MPa, a VaRTM (vacuum assist resin transfer molding) method comprising evacuating the interior of a mold and injecting a resin into the mold can also be used, but in this case, the injection pressure is preferably 0.1 to 0.6 MPa from the viewpoint of injection time and economy of equipment. Even when pressure injection is performed, it is preferred to evacuate the interior of a mold before injecting a resin composition because generation of voids is suppressed.

The resin film infusion method is a method comprising placing a carbon fiber base and an uncured resin film in a closed mold, heating the whole of the mold to melt the resin, then decompressing the interior of the mold and applying a pressure from the outside to impregnate the carbon fiber base with the resin, and heating the mold to cure the resin.

The prepreg of the present invention is one in which a part or the whole of the carbon fiber base of the present invention formed by disposing a carbon short fiber web on one or both of the surfaces of a continuous carbon fiber layer formed of continuous carbon fibers is impregnated with a matrix resin.

A state in which a part or the whole of the carbon fiber base is impregnated with a matrix resin is created in the following manner: a continuous carbon fiber layer formed of continuous carbon fibers is impregnated with a matrix resin, and a carbon short fiber web is then bonded to one or both of the surfaces of the continuous carbon fiber layer impregnated with the matrix resin.

A state in which a part or the whole of the carbon fiber base is impregnated with a matrix resin may be created in the following manner: a continuous carbon fiber layer formed of continuous carbon fibers is impregnated with a matrix resin, and a carbon short fiber web impregnated with a matrix resin, or a carbon short fiber web, to which a matrix resin film is bonded, is then bonded to one or both of the surfaces of the continuous carbon fiber layer impregnated with the matrix resin.

Further, a state in which a part or the whole of the carbon fiber base is impregnated with a matrix resin may be created in the following manner: a carbon fiber base obtained by disposing a carbon short fiber web on one or both of the surfaces of a continuous carbon fiber layer formed of continuous carbon fibers is impregnated with a matrix resin.

Examples of the method for impregnation of a matrix resin include a wet method comprising dissolving a matrix resin in a solvent such as methyl ethyl ketone or methanol to reduce the viscosity, and impregnating the solution, and a hot melt method (dry method) comprising heating a matrix resin to reduce the viscosity, and impregnating the matrix resin.

The wet method is a method comprising immersing carbon fibers in a solution of a matrix resin, and then taking out the carbon fibers, and evaporating the solvent using an oven or the like. The hot melt method is a method comprising impregnating carbon fibers directly with a matrix resin, the viscosity of which is reduced by heating, or a method comprising preparing a resin film formed by coating a sheet such as a release paper with a matrix resin, and superimposing the formed resin film on both surfaces or one surface of a carbon fiber base, and applying heat and a pressure to impregnate carbon fibers with the resin. The hot melt method is preferred because substantially no solvent remains in a prepreg.

The amount of carbon fibers per unit area in the prepreg of the present invention is preferably 60 to 2000 g/m². When the amount of carbon fibers is less than 60 g/m², the number of prepregs laminated should be increased for obtaining a predetermined thickness at the time of molding a carbon-fiber-reinforced composite material, so that molding operations may be complicated. When the amount of carbon fibers is more than 2000 g/m², the drape property of the prepreg tends to be deteriorated.

The volume content of fibers in the prepreg of the present invention is preferably 45 to 85% by volume, more preferably 50 to 80% by volume. When the volume content of fibers is less than 45% by volume, the amount of resin may be too large to obtain an advantage of a carbon-fiber-reinforced composite material excellent in specific strength and specific elastic modulus. Further, the heat generation rate during curing of a resin may become excessively high at the time of molding a carbon-fiber-reinforced composite material. When the volume content of fibers is more than 85% by volume, a resin impregnation failure may occur, leading to generation of a large number of voids in the resulting carbon-fiber-reinforced composite material.

When the carbon fiber-reinforced composite material of the present invention is produced using the prepreg of the present invention, the carbon-fiber-reinforced composite material of the present invention can be produced by shaping the prepreg into a desired shape or laminating the prepreg, and then subjecting the obtained shaped product or laminate to heat-and-pressure molding. Here, heat-and-pressure molding means that a resin is heated and cured while a pressure is applied.

When the carbon-fiber-reinforced composite material of the present invention is molded using the prepreg, the number of prepregs of the present invention laminated is determined depending on required properties. That is, when use of one prepreg of the present invention is sufficient, the number of prepregs of the present invention may be one. When the carbon fiber-reinforced composite material of the present invention is molded using the prepreg, the prepreg of the present invention and another prepreg, for example a prepreg including a layer formed of continuous carbon fibers impregnated with a matrix resin in which the carbon short fiber web of the present invention is not present, may be used in combination.

Examples of the heat-and-pressure molding method to be used for producing a carbon-fiber-reinforced composite material using a prepreg include a press molding method, an autoclave molding method, a bugging molding method, wrapping tape method and an internal pressure molding method.

The wrapping tape method is a method comprising winding a prepreg around a cored bar such as a mandrel to mold tubular article formed of a carbon-fiber-reinforced composite material. This method is used for preparing rod-shaped articles such as golf shafts and fishing rods. More specifically, this method is a method comprising winding a prepreg around a mandrel, winding a wrapping tape formed of a thermoplastic film around the outside of the prepreg for fixing the prepreg and applying a pressure to the prepreg, and heating and curing the resin in an oven, followed by drawing out the mandrel to obtain a tubular article.

The internal pressure molding method is a method comprising winding a prepreg around an internal pressure application body such as a tube made of thermoplastic resin, setting the preform wound around the internal pressure application body in a mold, and then introducing a gas of high pressure into the internal pressure application body to apply a pressure and simultaneously heating the mold to mold a tubular article etc. formed of a carbon-fiber-reinforced composite material. This method is used for molding articles with complicated shapes, such as rackets for tennis, badminton and the like, in addition to tubular articles such as bicycle frames, golf shafts and bats.

A carbon-fiber-reinforced composite material obtained by providing one prepreg of the present invention or a laminate including a plurality of prepregs of the present invention, followed by subjecting the prepreg or the laminate to heat-and-pressure molding has a layer formed by a continuous carbon fiber layer formed of continuous carbon fibers and a carbon short fiber web. The volume content of fibers in the continuous carbon fiber layer is preferably 50 to 85% by volume. The volume content of fibers in the layer formed from a carbon short fiber web is preferably 5 to 30% by volume.

When the volume content of fibers in the continuous carbon fiber layer is less than 50% by volume, the amount of resin may be excessively large to make it difficult to obtain a carbon-fiber-reinforced composite material excellent in specific strength and specific elastic modulus. Further, the heat generation rate during curing of a resin may become excessively high at the time of molding a carbon-fiber-reinforced composite material. When the volume content of fibers is more than 85% by volume, an impregnation failure of a resin into carbon fibers may occur, so that the resulting carbon-fiber-reinforced composite material may have a large number of voids.

When the volume content of fibers in the layer formed by a carbon short fiber web is less than 5% by volume, the network structure of carbon short fibers in the carbon short fiber web is not adequately obtained, and therefore interlaminar strength decreases, leading to existence of a fragile layer. Consequently, the static strength of the carbon-fiber-reinforced composite material may be reduced. Further, it may become difficult to form fiber bridges, leading to a reduction in interlaminar fracture toughness and conductivity. When the volume content of fibers in the layer formed by a carbon short fiber web is more than 30% by volume, a resin impregnation failure may occur, so that the resulting carbon-fiber-reinforced composite material may have a large number of voids.

A carbon-fiber-reinforced composite material molded by using at least one carbon fiber base of the present invention has excellent interlaminar fracture toughness, excellent static strength and excellent conductivity. Since the carbon-fiber-reinforced composite material is excellent in interlaminar fracture toughness, it is also excellent in impact resistance to impact from the outside, and particularly has high compression strength after impact (CAI). The high compression strength after impact (CAI) is an important property for use as a structural component for aircrafts.

A carbon-fiber-reinforced composite material molded by using the carbon fiber base of the present invention is suitably used in sports applications, general industrial applications and aerospace applications. More specifically, as for sports applications, the carbon-fiber-reinforced composite material is suitably used in applications of bicycle frames, bats, golf shafts, fishing rods, rackets for tennis and badminton, sticks for hockey etc. and ski poles. As for general industrial applications, the carbon-fiber-reinforced composite material is suitably used for structural materials of moving bodies such as automobiles, marine vessels and railroad vehicles, drive shafts, plate springs, blades of windmills, pressure vessels, fly wheels, sheet making rollers, roof materials, cables, electronic device components such as IC trays and cases (housings) of notebook personal computers, and repairing and reinforcing materials, etc. As for aerospace applications, the carbon-fiber-reinforced composite material is suitably used for structural materials of aircrafts, rockets and artificial satellites, etc.

Next, the present invention will be described further in detail by way of Examples, but the present invention is not limited to these Examples. Methods for measurement of various kinds of physical properties and methods for preparation of webs and prepregs are as described below. These physical properties are those measured in an environment at a temperature of 23°C and a relative humidity of 50% unless otherwise specified.

### (1) Measurement of Average Fiber Length of Carbon Short Fibers Contained in Carbon Short Fiber Web:

A carbon short fiber web was peeled off from a carbon fiber base, and the extracted carbon short fiber web was put in water and stirred to disperse carbon short fibers. The obtained dispersion liquid was separated by filtration to collect carbon short fibers on a filter paper. From the carbon short fibers present on the filter paper, 400 carbon short fibers were randomly extracted, the lengths of the carbon short fibers were measured to the order of 1 µm with an optical microscope, and the average fiber length of carbon short fibers was calculated.

### (2) Evaluation of Dispersibility of Monofilaments in Carbon Short Fiber Web:

The carbon short fiber web disposed on the surface of the carbon fiber base was observed with a digital microscope, and 100 carbon short fibers were randomly selected therefrom. When 90 carbon short fibers or more (i.e. 90% or more) of the selected 100 carbon short fibers were dispersed in the state of monofilaments, carbon short fibers were considered to be dispersed in the form of monofilaments. When the number of carbon short fibers dispersed in the state of monofilaments, among the selected 100 carbon short fibers, was less than 90 (i.e. less than 90%), carbon short fibers were considered to be not dispersed in the form of monofilaments.

### (3) Evaluation of Spring Back Property:

A carbon short fiber web was impregnated with an epoxy resin, and then subjected to heat-and-pressure molding by a press machine at a surface pressure of 0.6 MPa at a temperature of 150°C for 30 minutes. A thickness of the obtained carbon short fiber web after heat-and-pressure molding was measured by a micrometer, and a value of the obtained thickness was defined as t₃. On the other hand, the carbon short fiber web after heat-and-pressure molding was heated in an electric furnace at a temperature of 500°C for 2 hours to burn out the epoxy resin contained in carbon short fibers. A thickness of the carbon short fiber web after burning out the resin was measured by laser displacement meter LC-2100 (manufactured by KEYENCE CORPORATION.), and a value of the obtained thickness was defined as t₄. When the relationship of t₄ > 1.5 × t₃ (formula 3) was satisfied, the carbon short fiber web was considered to have a spring back property. When this relationship was not satisfied, the carbon short fiber web was considered to have no spring back property.

### (4) Measurement of Thickness of Layer Formed of Carbon Short Fiber Web IN MOLDED PRODUCT:

Prepregs were laminated, and then subjected to heat-and-pressure molding in an autoclave under a pressure of 0.6 MPa at a temperature of 90°C for 30 minutes, and then 135°C for 120 minutes to obtain a molded product. The obtained molded product was cut, and then embedded with an epoxy resin, and the cut surface obtained by cutting the molded product was polished, and microscopically observed. On the cut surface, the thickness of a layer formed of a carbon short fiber web was measured at 30 points, an average of the obtained values was calculated, and the calculated value was defined as a thickness of the layer formed of a carbon short fiber web.

### (5) 0 Degree Flexural Test of Carbon-Fiber-Reinforced Composite Material:

In accordance with the specifications of JIS-K7074, a test piece of a carbon-fiber-reinforced composite material having a width of 15 mm, a length of 100 mm and a thickness of 2 mm was prepared, the prepared test piece was subjected to a 0 degree flexural test under conditions including a cross head speed of 5 mm/minute, a span length of 80 mm, an indenter radius of 5 mm and a fulcrum radius of 2 mm using "INSTRON" universal tester (manufactured by INSTRON) to evaluate the carbon-fiber-reinforced composite material.

### (6) Opening Mode Interlaminar Fracture Toughness (GIc) Test of Carbon-Fiber-Reinforced Composite Material:

In accordance with the specifications of JIS-K7086, a test was conducted according to the following procedures (a) to (e).
(a) A flat plate formed of a carbon-fiber-reinforced composite material with a film inserted at the center, which had a thickness of 3 mm, was cut into a width of 20 mm and a length of 195 mm to provide a test piece.
(b) The film-inserted part of the test piece was opened with a sharp-edged tool such as a knife to introduce a preliminary crack of 2 mm to 5 mm.
(c) Both the side surfaces of the test piece were coated with a white paint for facilitating observation of crack development.
(d) A block for pin loading (length: 25 mm, made of aluminum) was bonded to a test piece end (film inserting side).
(e) An opening mode interlaminar fracture toughness (GIc) test was conducted using INSTRON universal tester (manufactured by INSTRON). The cross head speed was set as follows: 0.5 mm/minute until crack development reached 20 mm; and 1 mm/minute after crack development reached 20 mm. A value of opening mode interlaminar fracture toughness (GIc) in the process of crack development was calculated from a load, a displacement and a crack length.

### (7) Shear Mode Interlaminar Fracture Toughness (GIIc) Test of Carbon-Fiber-Reinforced Composite Material:

Using a test piece prepared according to the procedures (6)(a) to (c), a shear mode interlaminar fracture toughness (GIIc) test was conducted using INSTRON universal tester (manufactured by INSTRON) in accordance with the specifications of JIS-K7086. The test was conducted under conditions including a cross head speed of 0.5 mm/minute, a span length of 100 mm, an indenter radius of 5 mm and a fulcrum radius of 2 mm, and the test piece was set such that the fulcrum was at a position of 20 mm from a test piece end (film inserting side) . A value of shear mode interlaminar fracture toughness (GIIc) was calculated from a load and a crack length.

### (8) Measurement of Thickness Direction Conductivity of Carbon-Fiber-Reinforced Composite Material:

A sample having a length of 20 mm and a width of 20 mm was cut out from a flat plate formed of a carbon-fiber-reinforced composite material, which had a thickness of 2 mm, and a conductive paste "DOTITE (registered trademark)" D-550 (manufactured by Fujikura Kasei Co., Ltd.) was applied to both of the surfaces of the sample to prepare a test piece. The obtained test piece was measured for the resistance in a thickness direction, i.e. a direction perpendicular to the lamination direction by a two-terminal method using R6581 Digital Multimeter (manufactured by Advantest Corporation), and an electrical conductivity was calculated to determine a value of thickness direction conductivity.

### (9) Measurement of Compression Strength After Impact (CAI) of Carbon-Fiber-Reinforced Composite Material:

A rectangular test piece having a length of 150 mm and a width of 100 mm was cut out from a pseudo-isotropic 24-layer-laminated fiber-reinforced composite material with the longitudinal direction of the test piece set at a carbon fiber orientation angle of 0 degree, and a falling weight impact of 20 J per 1 mm of thickness of the test piece was applied to the center of the obtained rectangular test piece in accordance with the specifications of JIS-K7089 (1996), followed by measuring compression strength after impact (CAI) in accordance with the specifications of JIS-K7089 (1996). The number of samples was 5.

Materials used in Examples and Comparative Examples described below are as follows.

### (1) Carbon Fiber CF1:

Carbon fiber ("TORAYCA (registered trademark)" T700S-12K; manufactured by Toray Industries, Inc.; tensile elastic modulus: 230 GPa; tensile strength: 4900 MPa).

### (2) Carbon Fiber CF2:

Carbon fiber ("TORAYCA (registered trademark)" T800S-24K; manufactured by Toray Industries, Inc.; tensile elastic modulus: 294 GPa; tensile strength: 5490 MPa).

### (3) Fiber Base FB1:

Carbon fibers CF2 were aligned at a density of 1.8 fibers/cm as warps, and glass fiber bundles ECE225-1/0-1Z (manufactured by Nitto Boseki Co., Ltd.; number of filaments: 200; fineness: 22.5 tex) were aligned at a density of 1.8 fibers/cm as auxiliary warps arranged in parallel to the warps and in an alternate manner, thereby providing a unidirectional fiber sheet with these warps arranged in one direction.

As wefts, polyamide fiber bundles were provided. The provided wefts were woven so as to cross the auxiliary warps using a weaving machine such that the wefts were arranged at a density of 3 fibers/cm in a direction orthogonal to the warps of the unidirectional fiber sheet, thereby preparing a woven fabric with the warps: carbon fibers CF2 as a principal body.

This woven fabric is usually called a unidirectional fabric. In this unidirectional woven fabric, carbon fibers CF2 (warps) are arranged in one direction and arranged on substantially the same plane, and therefore carbon fibers CF2 are substantially free from crimp. Therefore, this unidirectional woven fabric is usually called a unidirectional non-crimp fabric. The ratios of the fineness of the weft and the auxiliary warp to the fineness of the weft in the woven fabric are each 2.2%.

### (4) Epoxy Resin ER1:

In a kneader were added 50 parts by mass of "EPICLON (registered trademark)" 830 (bisphenol F type epoxy resin; epoxy equivalent: 173; manufactured by DIC Corporation), 30 parts by mass of "jER (registered trademark)" 1007 (bisphenol A type epoxy resin; epoxy equivalent: 1975; manufactured by Mitsubishi Chemical Corporation), 20 parts by mass of "EPICLON (registered trademark)" HP7200L (dicyclopentadiene type epoxy resin; epoxy equivalent: 250; manufactured by DIC Corporation) and 2 parts by mass of VINYLEC K (polyvinyl formal; manufactured by CHISSO CORPORATION), and the mixture was heated to a temperature of 160°C while being kneaded, and kneaded at a temperature of 160°C for 1 hour to obtain a transparent viscous liquid.

The viscous liquid was cooled to a temperature of 60°C while being kneaded, 4 parts by mass of DICY7T (dicyandiamide; manufactured by Mitsubishi Chemical Corporation) as a curing agent and 3 parts by mass of DCMU99 (3-(3,4-dichlorophenyl)-1,1-dimethylurea; manufactured by HODOGAYA CHEMICAL CO., LTD.) were added, and the mixture was kneaded to obtain an epoxy resin ER1.

### (5) Resin Film RF1 and Resin Film RF2:

Using a reverse roll coater, the epoxy resin ER1 was applied onto a release paper to prepare a resin film RF1 having a weight per unit area of 38 g/m² and a resin film RF2 having a weight per unit area of 20 g/m².

### (6) Unidirectional Prepreg Sheet PS1:

Carbon fibers CF1 were arranged in the form of a sheet in one direction so that the weight per unit area was 150 g/m², thereby providing a carbon fiber sheet. The resin film RF1 was superimposed on each of one surface and the other surface of the provided carbon fiber sheet, and heated and pressurized to impregnate the carbon fiber sheet with an epoxy resin forming the resin film RF1, thereby preparing a unidirectional prepreg sheet PS1 having a fiber volume content of 57%. The unidirectional prepreg sheet PS1 is a prepreg sheet which is formed from a continuous carbon fiber layer formed of continuous carbon fibers (carbon fibers CF1) and the epoxy resin ER1 impregnated therein and which does not have a layer of carbon short fiber web.

### (7) Carbon Short Fiber Web SFW:

The carbon fibers CF1 were cut into a predetermined length with a cartridge cutter to prepare chopped carbon fibers (carbon short fibers). A dispersion including water and a surfactant (Polyoxyethylene Lauryl Ether (trade name), manufactured by nacalai tesque, Inc.) and having a surfactant concentration of 0.1% by mass was prepared. From the dispersion and the chopped carbon fibers, a carbon short fiber web SFW was prepared using a carbon short fiber web producing apparatus illustrated in Fig. 1.

In Fig. 1, the carbon short fiber web producing apparatus 1 includes a dispersion tank 2, a sheet making tank 3, a mesh conveyor 4 and a delivery conveyor 5. The dispersion tank 2 includes in the upper part thereof a chopped carbon fiber supply opening 21 for supplying chopped carbon fibers (carbon short fibers) CCF to the dispersion tank 2. A dispersion medium supply pipe 22 is attached in the upper part of the dispersion tank 2, and a dispersion discharge pipe 23 is attached in the lower part of the dispersion tank 2. A stirrer 24 is provided in the dispersion tank 2. The dispersion discharge pipe 23 is provided with an opening/closing cock 25.

The downstream end of the dispersion discharge pipe 23 is opened to the sheet making tank 3. The lower surface of the sheet making tank 3 is opened to the upper surface of the mesh conveyor 4. A surface of the mesh conveyor 4 on a side opposite to the sheet making tank 3 is opened toward a suction apparatus 41. The delivery conveyor 5 is provided so as to have a relationship with the mesh conveyor 4 such that it receives a web delivered by the mesh conveyor 4 and then delivers the web.

For producing the carbon short fiber web SFW using the carbon short fiber web producing apparatus 1, a cylindrical container having a diameter of 1000 mm was used as the dispersion tank 2. The dispersion discharge pipe 23 connecting the dispersion tank 2 and the sheet making tank 3 was provided with a transport portion 23a extending straight while being inclined at an angle θ of 30° with respect to the horizon. The mesh conveyor 4 provided on the bottom of the sheet making tank 3 was a mesh conveyor having a sheet making surface having a width of 500 mm. For forming carbon short fibers into a sheet, the concentration of chopped carbon fibers (carbon short fibers) CCF in a dispersion was adjusted to adjust the weight of carbon short fibers per unit area in the resulting carbon short fiber web SFW.

To a carbon short fiber sheet 51 obtained by forming carbon short fibers into a sheet, a predetermined-concentration aqueous polyvinyl alcohol solution (KURARAY POVAL, manufactured by KURARAY CO., LTD) as a binder was added dropwise to be deposited in a small amount, and the carbon short fiber sheet 51 was dried in a drying furnace at a temperature of 140°C for 1 hour to produce a carbon short fiber web SFW.

### (8) Prepreg Sheet PS2:

The carbon short fiber web SFW was disposed on the unidirectional prepreg sheet PS1, and the former and the latter were press-bonded to each other with the temperature elevated to 60°C to produce a prepreg sheet PS2 with the carbon short fiber web SFW disposed on the unidirectional prepreg sheet PS1. When a layer formed by the carbon short fiber web was large, a carbon short fiber web obtained by bonding one or two resin films RF2 to the carbon short fiber web SFW, heating and pressurizing the laminate and impregnating an epoxy resin beforehand was used so that voids were not present in the resulting carbon-fiber-reinforced composite material.

### (9) Polyamide Fiber PAF:

Fibers of a transparent polyamide (trade name "GRILAMID (registered trademark)" TR-55, manufactured by Emuzaberuke Co.) discharged from a mouthpiece provided with one orifice were cut to produce polyamide fibers having a true-circular cross-sectional shape, a fiber diameter of 22 µm and a fiber length of 6 mm.

### (10) Epoxy Resin ER2:

"SUMICURE" S (4,4'-diaminodiphenylsulfone, manufactured by Sumitomo Chemical Co., Ltd.), "ARALDITE" MY721 (40% by weight), "EPICOAT" 630 (10% by weight), "EPICOAT" 825 (35% by weight) and GAN (15% by weight) were weighed and taken, and sufficiently stirred at a temperature of 70°C to homogeneity to obtain a main agent of a matrix resin composition. "EPICURE" W (70% by weight), 3,3'-DAS (20% by weight) and "SUMICURE" S (10% by weight) were weighed and taken, and sufficiently stirred at a temperature of 90°C to homogeneity to obtain a curing agent of a matrix resin composition. Next, 38% by weight of the curing agent was added to 100% by weight of the main agent, and the mixture was sufficiently stirred to homogeneity to obtain a matrix resin composition including an epoxy resin ER2.

The materials provided as described above were used to prepare carbon short fiber webs, prepregs and carbon-fiber-reinforced composite materials in Examples and Comparative Examples described below. Results of evaluating respective properties are shown in Tables 1 to 4.

### [Example 1]

Carbon fibers CF1 were used to prepare a carbon short fiber web SFW having an average fiber length of 3 mm and a weight per unit area of 6 g/m². As shown in Table 1, carbon short fibers in the carbon short fiber web SFW were dispersed in the form of monofilaments. The carbon short fiber web SFW had a spring back property.

The obtained carbon short fiber web SFW was disposed on a unidirectional prepreg sheet PS1 to prepare a prepreg sheet PS2.

Thirteen prepreg sheets PS2 obtained were laminated with the arrangement direction of continuous carbon fibers set to the 0 degree direction, and the unidirectional prepreg sheet PS1 was laminated on the uppermost surface to prepare a laminate with carbon short fiber webs SFW disposed between layers.

The obtained laminate was heated at a temperature of 90°C for 30 minutes and then heated at a temperature of 135°C for 120 minutes under a pressure of 0.6 MPa in an autoclave to cure the resin to prepare a molding plate having a thickness of 2 mm. This molding plate was used as a test piece for flexural and conductivity test.

Eight unidirectional prepreg sheets PS1 were laminated with the arrangement direction of continuous carbon fibers set to the 0 degree direction, and 5 prepreg sheets PS2 were laminated thereon, 8 unidirectional prepreg sheets PS1 were laminated thereon, and one unidirectional prepreg PS1 was laminated on the uppermost surface to prepare a laminate with carbon short fiber webs SFW disposed between middle five layers .

A film in a volume equivalent to 40 mm was inserted, in parallel to the 0 degree from the end of the laminate, between layers (the eleventh and twelfth layers) in the middle in the thickness direction of the obtained laminate.

The obtained laminate was heated at a temperature of 90°C for 30 minutes and then heated at a temperature of 135°C for 120 minutes under a pressure of 0.6 MPa in an autoclave to cure the resin to prepare a molding plate for GIc and GIIc tests which had a thickness of 3 mm. As shown in Table 1, high values were obtained for all of 0 degree flexural strength, GIc, GIIc and thickness direction conductivity.

### [Example 2]

A web, a prepreg and a carbon-fiber-reinforced composite material were prepared in the same manner as in Example 1 except that the average fiber length of carbon short fibers in the carbon short fiber web SFW was changed to 6 mm. As a result of evaluating physical properties, high values were obtained for all of 0 degree flexural strength, GIc, GIIc and thickness direction conductivity as shown in Table 1.

### [Example 3]

A web, a prepreg and a carbon-fiber-reinforced composite material were prepared in the same manner as in Example 1 except that the average fiber length of carbon short fibers in the carbon short fiber web SFW was changed to 12 mm. As a result of evaluating physical properties, high values were obtained for all of 0 degree flexural strength, GIc, GIIc and thickness direction conductivity as shown in Table 1.

### [Example 4]

A web, a prepreg and a carbon-fiber-reinforced composite material were prepared in the same manner as in Example 2 except that the weight of carbon short fibers per unit area in the carbon short fiber web SFW was changed to 3 g/m². As a result of evaluating physical properties, high values were obtained for all of 0 degree flexural strength, GIc, GIIc and thickness direction conductivity as shown in Table 1.

### [Example 5]

A web, a prepreg and a carbon-fiber-reinforced composite material were prepared in the same manner as in Example 2 except that the weight of carbon short fibers per unit area in the carbon short fiber web SFW was changed to 9 g/m², one resin film RF2 was bonded to the carbon short fiber web SFW, and an epoxy resin was impregnated beforehand. As a result of evaluating physical properties, high values were obtained for all of 0 degree flexural strength, GIc, GIIc and thickness direction conductivity as shown in Table 2.

### [Example 6]

A web, a prepreg and a carbon-fiber-reinforced composite material were prepared in the same manner as in Example 2 except that the weight of carbon short fibers per unit area in the carbon short fiber web SFW was changed to 12 g/m², two resin films RF2 were bonded to the carbon short fiber web SFW, and an epoxy resin was impregnated beforehand. As a result of evaluating physical properties, 0 degree flexural strength slightly decreased because the thickness of the layer formed of the carbon short fiber web SFW in the carbon-fiber-reinforced composite material increased, but high values were obtained for GIc, GIIc and thickness direction conductivity as shown in Table 2.

### [Example 7]

A web, a prepreg and a carbon-fiber-reinforced composite material were prepared in the same manner as in Example 2 except that stirring was made slightly less vigorous. As a result of evaluating physical properties, 0 degree flexural strength, GIc, GIIc and thickness direction conductivity slightly decreased, but still high values were obtained as shown in Table 2.

### [Example 8]

A laminate prepared in the following manner was provided: with the longitudinal direction of carbon fibers set to 0 degree, 12 fiber bases FB1 were laminated by repeating [45°/0°/-45°/90°] three times, and 12 fiber bases FB1 were laminated thereon by repeating [90°/-45°/0°/45°] three times.

In this laminate, carbon short fiber webs SFW (average fiber length of carbon short fibers: 6 mm; weight of carbon short fibers per unit area: 6 g/m²) were disposed between layers of fiber base FB1. That is, a fiber base with total 23 carbon short fiber webs SFW disposed between total 24 layers of fiber base FB1 was obtained.

The obtained fiber base was disposed on the molding surface of a mold, the mold was sealed with a bag material (polyamide film) and a sealant, the cavity of the mold was evacuated, the mold was transferred to a hot-air dryer, the temperature was elevated from room temperature to 80°C at a rate of 3°C per minute, and the mold was heated at 80°C for 1 hour. Thereafter, the whole mold was cooled to a temperature of 60°C or lower in the air while the vacuum state of the cavity was maintained, and thereafter the cavity was released to the atmosphere to produce a preform.

The obtained preform was disposed on the molding surface of a mold, a polyester fabric subjected to a release treatment as a peel ply and an aluminum wire mesh as a resin diffusion medium were sequentially disposed thereon, and they were sealed with a bag material and a sealant to form a cavity. The cavity was provided with a resin inlet and a vacuum suction port.

The interior of the cavity was suctioned from the vacuum suction port using a vacuum pump, the vacuum degree was adjusted to be -90 kPa or less, the mold and the preform were then heated to a temperature of 60°C, and a separately provided matrix resin composition heated to a temperature of 60°C beforehand was then injected into the mold at an injection pressure of 0.2 MPa using a resin injection apparatus, and thereby impregnated into the fiber base. After impregnation, the mold was heated to a temperature of 140°C at a rate of 1.5°C/minute, held for 2 hours, and then cooled to a temperature of 30°C to perform demolding. After demolding, post-curing of the resin was performed in an oven under the following conditions to produce a fiber-reinforced composite material.
(1) The temperature was elevated from 30°C to 180°C at a ratio of 1.5°C/min.
(2) The temperature was kept at 180°C for 2 hours.
(3) The temperature was lowered from 180°C to 30°C at a ratio of 2.5°C/min.

The obtained carbon-fiber-reinforced composite material had no resin-unimpregnated part and had good quality. The fiber volume content of reinforcing fibers was 56%.

Next, compression strength after impact of the obtained fiber-reinforced composite material was evaluated. As a result, compression strength after impact was sufficiently high as it was 222 MPa. The thickness of the layer formed of the carbon short fiber web in the obtained carbon-fiber-reinforced composite material was 36 µm. When a test piece having a length of 20 mm and a width of 20 mm was cut out from a flat plate of the obtained carbon-fiber-reinforced composite material and the conductivity of the test piece in the thickness direction was measured, the value of conductivity was 1.0 S/m.

### [Example 9]

A carbon fiber composite material was produced in the same manner as in Example 8 except that the average fiber length of carbon short fibers in the carbon short fiber web SFW was changed to 3 mm. Compression strength after impact was sufficiently high as it was 220 MPa. The thickness of the layer formed of the carbon short fiber web SFW was 30 µm. When a test piece having a length of 20 mm and a width of 20 mm was cut out from a flat plate of the obtained carbon-fiber-reinforced composite material and the conductivity of the test piece in the thickness direction was measured, the value of conductivity was 1.0 S/m.

### [Comparative Example 1]

No carbon short fiber web SFW was used, and only the unidirectional prepreg sheet PS1 was used to prepare a carbon-fiber-reinforced composite material. As a result of evaluating physical properties, a high value was obtained for 0 degree flexural strength, but the values of GIc and GIIc were low as shown in Table 3.

### [Comparative Example 2]

A web, a prepreg and a carbon-fiber-reinforced composite material were prepared in the same manner as in Example 1 except that the average fiber length of carbon short fibers in the carbon short fiber web SFW was changed to 0.5 mm. As a result of evaluating physical properties, the layer formed of the carbon short fiber web SFW became a fragile layer, and 0 degree flexural strength decreased as shown in Table 3. Sufficient fiber bridges were not obtained, so that the effect of improvement of GIc and GIIc was low.

### [Comparative Example 3]

A web, a prepreg and a carbon-fiber-reinforced composite material were prepared in the same manner as in Example 1 except that the average fiber length of carbon short fibers in the carbon short fiber web SFW was changed to 18 mm, one resin film RF2 was bonded to the carbon short fiber web SFW, and an epoxy resin was impregnated beforehand. As a result of evaluating physical properties, the thickness of the layer formed of the carbon short fiber web SFW increased, and 0 degree flexural strength slightly decreased as shown in Table 3. Since the carbon-fiber-reinforced composite material had no spring back property, sufficient fiber bridges were not obtained, and GIc was not improved.

### [Comparative Example 4]

In production of the carbon short fiber web SFW, stirring was made less vigorous to prepare a carbon short fiber web in which carbon short fibers were not dispersed in the form of monofilaments. A prepreg and a carbon-fiber-reinforced composite material were prepared in the same manner as in Example 2 except that the above-described carbon short fiber web was used. As a result of evaluating physical properties, the network structure of carbon short fibers in the carbon short fiber web was not sufficient, and therefore the effect of improvement of GIc, GIIc and conductivity was low as shown in Table 3.

### [Comparative Example 5]

In production of the carbon short fiber web SFW, no surfactant was used, and stirring was made less vigorous to prepare a carbon short fiber web in which bundles of carbon short fibers remained and carbon short fibers were not dispersed in the form of monofilaments. A prepreg and a carbon-fiber-reinforced composite material were prepared in the same manner as in Example 2 except that the above-described carbon short fiber web was used, and one resin film RF1 was bonded to the carbon short fiber web and an epoxy resin was impregnated beforehand. As a result of evaluating physical properties, the layer formed of the carbon short fiber web became a fragile layer, and 0 degree flexural strength decreased as shown in Table 4. The network structure of carbon short fibers in the carbon short fiber web was not sufficient, and the effect of improvement of GIc, GIIc and conductivity was not obtained.

### [Comparative Example 6]

A prepreg and a carbon-fiber-reinforced composite material were prepared in the same manner as in Example 2 except that in place of carbon fibers CF1, polyamide fibers PAF were used as thermoplastic resin fibers to prepare a web such that the weight of polyamide fibers PAF per unit area in the web was 12 g/m², two resin films RF2 were bonded to this web, and an epoxy resin was impregnated beforehand. As a result of evaluating physical properties, GIc and GIIc were improved, but the polyamide fiber layer became a fragile layer, and 0 degree flexural strength decreased as shown in Table 4. The polyamide fiber layer became an insulating layer, so that thickness direction conductivity was reduced.

### [Comparative Example 7]

A carbon-fiber-reinforced composite material was prepared using, in place of the carbon short fiber web SFW in the prepreg sheet PS2, a prepreg sheet obtained by spreading nylon 12 particles (SP-10; particle diameter: 10 µm; manufacture by Toray Industries, Inc.) as thermoplastic resin particles over one surface of the unidirectional prepreg sheet PS1 in the prepreg sheet PS2 such that the weight per unit area was 6 g/m². As a result of evaluating physical properties, the layer formed of nylon 12 particles became an insulating layer, so that thickness direction conductivity was reduced as shown in Table 4.

### [Comparative Example 8]

A carbon-fiber-reinforced composite material was prepared using, in place of the carbon short fiber web SFW in the prepreg sheet PS2, a prepreg sheet obtained by spreading glassy carbon (BELLPEARL C-2000; average particle diameter: 15 µm; manufacture by Kanebo, Ltd.) as carbon particles over one surface of the unidirectional prepreg sheet PS1 in the prepreg sheet PS2 such that the weight per unit area was 6 g/m². As a result of evaluating physical properties, thickness direction conductivity was improved, but GIc and GIIc were not improved as shown in Table 4.

### [Comparative Example 9]

A carbon fiber composite material were prepared in the same manner as in Example 8 except that the carbon short fiber web SFW was not disposed between layers. Compression strength after impact was insufficient as it was 160 MPa. The thickness of the layer formed of the fiber base FB1 was 30 µm. When a test piece having a length of 20 mm and a width of 20 mm was cut out from a flat plate of the obtained carbon-fiber-reinforced composite material and the conductivity of the test piece in the thickness direction was measured, the value of conductivity was 0.8 S/m.

**[Table 1]**

| | | Example 1 | Example 2 | Example 3 | Example 4 |
|---|---|---|---|---|---|
| Carbon short fiber web | Forming material | CF1 | CF1 | CF1 | CF1 |
| | Average fiber length [mm] | 3 | 6 | 12 | 6 |
| | Weight per unit area [g/m²] | 6 | 6 | 6 | 3 |
| | Fiber diameter [µm] | 7 | 7 | 7 | 7 |
| | Monofilament dispersion [%] | 96 | 96 | 96 | 97 |
| | Spring back property [t4/t3] | 4.2 | 5.1 | 2.5 | 3.0 |
| Carbon-fiber-reinforced composite material | Thickness of layer formed of carbon short fiber web | 30 | 35 | 40 | 20 |
| | 0 degree flexural strength [MPa] | 1650 | 1630 | 1600 | 1680 |
| | GIc[kJ/m²] | 0.52 | 0.54 | 0.53 | 0.50 |
| | GIIc[kJ/m²] | 1.6 | 1.7 | 1.6 | 1.5 |
| | Thickness direction conductivity [S/m] | 1.2x 10⁰ | 1.1x 10⁰ | 1.0x 10⁰ | 1.0x 10⁰ |

**[Table 2]**

| | | Example 5 | Example 6 | Example 7 |
|---|---|---|---|---|
| Carbon short fiber web | Forming material | CF1 | CF1 | CF1 |
| | Average fiber length [mm] | 6 | 6 | 6 |
| | Weight per unit area [g/m²] | 9 | 12 | 6 |
| | Fiber diameter [µm] | 7 | 7 | 7 |
| | Monofilament dispersion [%] | 96 | 95 | 90 |
| | Spring back property [t4/t3] | 5.5 | 5.8 | 2.2 |
| Carbon-fiber-reinforced composite material | Thickness of layer formed of carbon short fiber web | 50 | 70 | 40 |
| | 0 degree flexural strength [MPa] | 1550 | 1500 | 1600 |
| | GIc[kJ/m²] | 0.50 | 0.50 | 0.48 |
| | GIIc[kJ/m²] | 1.5 | 1.6 | 1.4 |
| | Thickness direction conductivity [S/m] | 9.0x 10⁻¹ | 8.0x 10⁻¹ | 7.0x 10⁻¹ |

**[Table 3]**

| | | Comparative Example 1 | Comparative Example 2 | Comparative Example 3 | Comparative Example 4 |
|---|---|---|---|---|---|
| Carbon short fiber web or other interlaminar reinforcing materials | Forming material | - | CF1 | CF1 | CF1 |
| | Average fiber length [mm] | - | 0.5 | 18 | 6 |
| | Weight per unit area [g/m²] | - | 6 | 6 | 6 |
| | Fiber diameter or particle diameter [µm] | - | 7 | 7 | 7 |
| | Monofilament dispersion [%] | - | 96 | 94 | 80 |
| | Spring back property [t4/t3] | - | 1.2 | 1.4 | 1.4 |
| Carbon-fiber-reinforced composite material | Thickness [µm] of layer formed of carbon short fiber web or other interlaminar reinforcing materials | - | 30 | 50 | 40 |
| | 0 degree flexural strength [MPa] | 1700 | 1450 | 1550 | 1520 |
| | GIc[kJ/m²] | 0.39 | 0.41 | 0.38 | 0.40 |
| | GIIc[kJ/m²] | 0.97 | 1.1 | 1.3 | 1.2 |
| | Thickness direction conductivity [S/m] | 1.5x 10⁻¹ | 8.0x 10⁻¹ | 9.0x 10⁻¹ | 5.2x 10⁻¹ |

**[Table 4]**

| | | Comparative Example 5 | Comparative Example 6 | Comparative Example 7 | Comparative Example 8 |
|---|---|---|---|---|---|
| Carbon short fiber web or other interlaminar reinforcing materials | Forming material | CF1 | PAF | Nylon 12 particles | Carbon particles |
| | Average fiber length [mm] | 6 | 6 | - | - |
| | Weight per unit area [g/m²] | 6 | 12 | 6 | 6 |
| | Fiber diameter [µm] | 7 | 22 | 10 | 15 |
| | Monofilament dispersion [%] | 50 | 90 | - | - |
| | Spring back property [t4/t3] | 1.2 | - | - | - |
| Carbon-fiber-reinforced composite material | Thickness [µm] of layer formed of carbon short fiber web or other interlaminar reinforcing materials | 50 | 70 | 30 | 30 |
| | 0 degree flexural strength [MPa] | 1300 | 1220 | 1350 | 1500 |
| | GIc[kJ/m²] | 0.35 | 0.51 | 0.42 | 0.38 |
| | GIIc[kJ/m²] | 0.94 | 1.8 | 1.7 | 0.90 |
| | Thickness direction conductivity [S/m] | 2.0x 10⁻¹ | 2.0x 10⁻⁵ | 4.2x 10⁻⁴ | 6.0x 10⁻¹ |

### INDUSTRIAL APPLICABILITY

A carbon fiber base of the present invention or a carbon-fiber-reinforced composite material of the present invention formed from the carbon fiber base of the present invention has all of excellent interlaminar fracture toughness, excellent static strength and excellent conductivity. Accordingly, the carbon-fiber-reinforced composite material of the present invention is preferably used in aircraft structural parts, sports applications and general industrial etc.

### DESCRIPTION OF REFERENCE SIGNS

1: Carbon short fiber web producing apparatus
2: Dispersion tank
3: Sheet making tank
4: Mesh conveyor
5: Delivery conveyor
21: Chopped carbon fiber supply opening
22: Dispersion medium supply pipe
23: Dispersion discharge pipe
23a: Transport portion of dispersion discharge pipe
24: Stirrer
25: Opening/closing cock
41: Suction apparatus
51: Carbon short fiber sheet (carbon short fiber web)
CCF: Chopped carbon fiber (carbon short fiber)

## Claims

1. A carbon fiber base comprising a continuous carbon fiber layer formed of continuous carbon fibers, and a carbon short fiber web in which carbon short fibers having an average fiber length of 2 to 12 mm are dispersed in the form of monofilaments, the carbon short fiber web provided on one or both of the surfaces of the continuous carbon fiber layer.

2. Carbon fiber base according to claim 1, wherein the carbon short fiber web has a weight per unit area of 1 to 10 g/m².

3. The carbon fiber base according to claim 1, wherein the carbon short fibers in the carbon short fiber web have an average fiber diameter of 1 to 20 µm.

4. A prepreg formed by impregnating a part or the whole of the carbon fiber base according to any one of claims 1 to 3 with a matrix resin.

5. The prepreg according to claim 4, wherein the carbon short fiber web in a molded product obtained by subjecting the prepreg to heat-and-pressure molding has a thickness of 60 µm or less.

6. The prepreg according to claim 4, wherein the matrix resin is an epoxy resin.

7. A carbon fiber base laminate formed by laminating the carbon fiber base according to any one of claims 1 to 3 in two or more layers in a thickness direction.

8. A prepreg laminate formed by laminating the prepreg according to claim 4 in two or more layers in a thickness direction.

9. A carbon-fiber-reinforced composite material formed by integrating the carbon fiber base according to any one of claims 1 to 3 with a matrix resin.

10. A carbon-fiber-reinforced composite material formed by integrating the carbon fiber base laminate according to claim 7 with a matrix resin.

## Patentansprüche

1. Kohlefaserbasis, umfassend eine kontinuierliche Kohlefaserschicht, die aus kontinuierlichen Kohlefasern gebildet ist, und ein Kohlekurzfasergewebe, in dem Kohlekurzfasern mit einer durchschnittlichen Faserlänge von 2 bis 12 mm in Form von Monofilamenten dispergiert sind, wobei das Kohlekurzfasergewebe auf eine oder beide Oberflächen der kontinuierlichen Kohlefaserschicht vorgesehen ist.

2. Kohlefaserbasis nach Anspruch 1, wobei das Kohlekurzfasergewebe ein Flächengewicht von 1 bis 10 g/m² aufweist.

3. Kohlefaserbasis nach Anspruch 1, wobei die Kohlekurzfasern im Kohlekurzfasergewebe einen durchschnittlichen Faserdurchmesser von 1 bis 20 µm aufweisen.

4. Prepreg, gebildet durch Imprägnieren eines Teils oder der gesamten Kohlefaserbasis nach einem der Ansprüche 1 bis 3 mit einem Matrixharz.

5. Prepreg nach Anspruch 4, wobei das Kohlekurzfasergewebe in einem geformten Produkt, das durch Wärme- und Druckformen des Prepregs erhalten wird, eine Dicke von 60 µm oder weniger aufweist.

6. Prepreg nach Anspruch 4, wobei das Matrixharz ein Epoxidharz ist.

7. Kohlefaserbasislaminats, gebildet durch Laminieren der Kohlefaserbasis nach einem der Ansprüche 1 bis 3 in zwei oder mehr Schichten in einer Dickenrichtung.

8. Prepreglaminat, gebildet durch Laminieren des Prepregs nach Anspruch 4 in zwei oder mehr Schichten in einer Dickenrichtung.

9. Kohlefaserverstärktes Verbundmaterial, gebildet durch Zusammenfügen der Kohlefaserbasis nach einem der Ansprüche 1 bis 3 mit einem Matrixharz.

10. Kohlefaserverstärktes Verbundmaterial, gebildet durch Zusammenfügen des Kohlefaserbasislaminats nach Anspruch 7 mit einem Matrixharz.

## Revendications

1. Base de fibres de carbone comprenant une couche de fibres de carbone continues formée de fibres de carbone continues et une nappe de fibres courtes de carbone dans laquelle des fibres courtes de carbone ayant une longueur de fibre moyenne de 2 à 12 mm sont dispersées sous la forme de mono-filaments, la nappe de fibres courtes de carbone ménagée sur l'une ou les deux surfaces de la couche de fibres de carbone continues.

2. Base de fibres de carbone selon la revendication 1, dans laquelle la bande de fibres courtes de carbone a un poids par unité de surface de 1 à 10 g/m².

3. Base de fibres de carbone selon la revendication 1, dans laquelle les fibres courtes de carbone de la nappe de fibres courtes de carbone ont un diamètre moyen de fibres de 1 à 20 µm.

4. Pré-imprégné formé en imprégnant une partie ou la totalité de la base de fibres de carbone selon l'une quelconque des revendications 1 à 3 avec une résine matricielle.

5. Pré-imprégné selon la revendication 4, dans lequel la nappe de fibres courtes de carbone dans un produit moulé obtenu en soumettant le pré-imprégné à un moulage à chaud et sous pression présente une épaisseur égale ou inférieure à 60 µm.

6. Pré-imprégné selon la revendication 4, dans lequel la résine matricielle est une résine époxy.

7. Stratifié à base de fibres de carbone formé en stratifiant la base de fibres de carbone selon l'une quelconque des revendications 1 à 3 en deux couches ou plus dans le sens de l'épaisseur,

8. Stratifié à pré-imprégné formé en stratifiant le pré-imprégné selon la revendication 4, en deux couches ou plus dans la direction de l'épaisseur.

9. Matériau composite renforcé par des fibres de carbone formé en intégrant la base de fibres de carbone selon l'une quelconque des revendications 1 à 3 à une résine matricielle.

10. Matériau composite renforcé par des fibres de carbone formé en intégrant le stratifié à base de fibres de carbone selon la revendication 7 avec une résine matricielle.
